(19) Europäisches Patentamt
European Patent Office
Office européen des brevets

(11) **EP 4 507 178 A1**

(12) **EUROPEAN PATENT APPLICATION**
published in accordance with Art. 153(4) EPC

(43) Date of publication:
**12.02.2025 Bulletin 2025/07**

(21) Application number: **23810529.0**

(22) Date of filing: **10.01.2023**

(51) International Patent Classification (IPC):
**H02M 3/07** (2006.01)

(52) Cooperative Patent Classification (CPC):
**H02J 7/00; H02M 3/07; H02M 3/156; H02M 3/158**

(86) International application number:
**PCT/CN2023/071594**

(87) International publication number:
**WO 2023/226452 (30.11.2023 Gazette 2023/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.05.2022 CN 202210590993**

(71) Applicant: **Huawei Technologies Co., Ltd.
Shenzhen, Guangdong 518129 (CN)**

(72) Inventors:
• **SHEN, Pengpeng
Shenzhen, Guangdong 518129 (CN)**
• **HU, Zhangrong
Shenzhen, Guangdong 518129 (CN)**
• **SONG, Jun
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **DIRECT-CURRENT-DIRECT-CURRENT CONVERTER AND ELECTRONIC DEVICE**

(57) This application discloses a direct current-direct current converter and an electronic device. The direct current-direct current converter includes: three ports and an SC circuit. A first port and a second port are input and output ports, and a third port is grounded. The SC circuit includes three capacitors and eight switching transistors. A first switching transistor is connected between the first port and a first node, and a second switching transistor is connected between the first node and a third node. A first end of a first capacitor is connected to the first node, and a second end of the first capacitor is grounded through a third switching transistor. A fourth switching transistor is connected between the second end of the first capacitor and a second node, and a second capacitor is connected between the second node and the third port. A fifth switching transistor is connected between the second node and the third node. A first end of a third capacitor is connected to the third node, a second end of the third capacitor is grounded through a sixth switching transistor, the second end of the third capacitor is connected to the second port through a seventh switching transistor, and an eighth switching transistor is connected between the third node and the second port. This reduces a volume occupied by a capacitor and an area occupied by a circuit board.

FIG. 3

## Description

This application claims priority to Chinese Patent Application No. 202210590993.7, filed with the China National Intellectual Property Administration on May 27, 2022 and entitled "DIRECT CURRENT-DIRECT CURRENT CONVERTER AND ELECTRONIC DEVICE", which is incorporated herein by reference in its entirety.

## TECHNICAL FIELD

This application relates to the field of charging technologies, and in particular, to a direct current-direct current (DC-DC, Direct Current) converter and an electronic device.

## BACKGROUND

Currently, a charging speed of an electronic device is required to be faster and faster. For example, a battery level can be reached to more than 65% within half an hour by using a fast charging technology of a mobile phone. Therefore, the electronic device is generally charged by using a switch capacitor (SC, Switch Capacitor) of high-voltage fast charging, to implement fast charging. After the electronic device is charged to a specific battery level through the fast charging, the electronic device switches to be charged by using a closed-loop low voltage, for example, using a buck circuit or a buck-boost circuit. Generally, a DC-DC converter in an electronic device includes an open-loop SC converter and a closed-loop buck circuit/buck-boost circuit.

However, an SC converter in the conventional technology includes a plurality of flying capacitors, for example, an SC circuit of a buck ratio of 4:1. According to a circuit topology, there are three flying capacitors with different withstand voltages: withstand voltage of 5 V, withstand voltage of 10 V, and withstand voltage of 15 V. Because the three flying capacitors have different withstand voltages, the three capacitors of different specifications are required. Therefore, the three capacitors have different packaging. In particular, the capacitor with the withstand voltage of 15 V occupies a large volume. As a result, an entire circuit board occupies a large area, which is not conducive to simplification of the electronic device.

## SUMMARY

To resolve the foregoing technical problem, this application provides a DC-DC converter and an electronic device, to reduce a volume occupied by a capacitor, and further reduce an area occupied by an entire circuit board.

According to a first aspect, this application provides a direct current-direct current DC-DC converter, including three ports and an SC circuit. When the DC-DC converter is a buck converter, a first port is used as a voltage input port, and a second port is used as a voltage output port. When the DC-DC converter is a boost converter, the first port is used as a voltage output port, the second port is used as a voltage input port, and a third port is grounded.

The SC circuit includes three capacitors and eight switching transistors. The three capacitors include: a first capacitor, a second capacitor, and a third capacitor. The eight switching transistors include a first switching transistor, a second switching transistor, a third switching transistor, a fourth switching transistor, a fifth switching transistor, a sixth switching transistor, a seventh switching transistor, and an eighth switching transistor. The first switching transistor is connected between the first port and a first node, and the second switching transistor is connected between the first node and a third node. A first end of the first capacitor is connected to the first node, and a second end of the first capacitor is grounded through the third switching transistor. The fourth switching transistor is connected between the second end of the first capacitor and a second node, and the second capacitor is connected between the second node and the third port. The fifth switching transistor is connected between the second node and the third node. A first end of the third capacitor is connected to the third node, a second end of the third capacitor is grounded through the sixth switching transistor, and the second end of the third capacitor is further connected to the second port through the seventh switching transistor. The eighth switching transistor is connected between the third node and the second port.

Currently, a requirement for lightness and thinness of an electronic device is increasingly high. Therefore, it is required that a smaller volume and a smaller area occupied by a charging circuit inside the electronic device are better. To reduce an area occupied by the DC-DC converter, the DC-DC converter provided in this application includes the three capacitors and eight switching transistors. A connection relationship between the three capacitors and eight switching transistors determines that an end of one capacitor in the three capacitors is grounded, and the other two capacitors are connected between the switching transistors. The foregoing circuit structure determines that withstand voltages of the first capacitor and the second capacitor in the circuit are the same, for example, the first capacitor and the second capacitor may be capacitor components whose withstand voltages are both 10 V, and a withstand voltage of the third capacitor in the circuit is less than the withstand voltage of the first capacitor. For example, the third capacitor may be a capacitor component whose withstand voltage is 5 V. That is, two capacitors in the SC circuit have a same specification, in other words, there are only capacitors of two specifications. However, a conventional DC-DC converter includes capacitors of three or more specifications. In addition, a maximum withstand voltage of a capacitor is greater than that in this application. Therefore, the specification of the capacitor in the SC circuit provided in this application is small, and corresponding packaging is small. This can save an area and a volume of a PCB. In addition, after the specification of the capacitor is reduced, a subsequent parasitic parameter of the capacitor is reduced. This improves performance of the DC-DC converter.

In a possible implementation, to reduce a loss of the SC circuit, the DC-DC converter provided in this application may further include an inductor, so that LC resonance is formed between the inductor and the capacitor, to reduce power consumption. In other words, the DC-DC converter further includes a first inductor. The first end of the first capacitor is connected to the first node through the first inductor. The first inductor and the first capacitor C1 form LC series resonance. When a switching frequency in the DC-DC converter is k, it is ensured that a resonance frequency of the LC series resonance is equal to or less than the switching frequency k, and when the resonance frequency of the LC series resonance is less than the switching frequency k, the resonance frequency of the LC series resonance may be slightly less than the switching frequency k, that is, the resonance frequency of the LC series resonance is close to the switching frequency k.

In a possible implementation, in addition to the first inductor, the DC-DC converter provided in this application may further include a second inductor. To be specific, it can be implemented that both the first capacitor and the third capacitor have corresponding inductors to form LC series resonance. That is, the DC-DC converter further includes the second inductor. A common end of the eighth switching transistor and the fifth switching transistor is connected to the third node through the second inductor. When the DC-DC converter includes the first inductor and the second inductor, two resonant cavities are formed. An inductance value of the second inductor and a capacitance value of the third capacitor need to meet a relationship between a resonance frequency and a switching frequency, to be specific, the resonance frequency needs to be equal to or slightly less than the switching frequency.

In a possible implementation, to reduce power consumption, in addition to the foregoing manner of including the first inductor and the second inductor, the DC-DC converter may further use another manner, to be specific, a resonant cavity is not formed by using a capacitor and an inductor, but a third inductor is connected to an output end of the entire converter. A common end of the eighth switching transistor and the seventh switching transistor is connected to the second port through the third inductor. When a switching frequency of the switching transistor in the SC circuit is k, parameter design ensures that some capacitors and the third inductor L3 in the SC circuit form a resonant circuit, and a resonance frequency of the resonant circuit is equal to or slightly less than the switching frequency k.

In a possible implementation, the DC-DC converter further includes: a controller, configured to: control turn-on time sequences of the first switching transistor, the fourth switching transistor, the sixth switching transistor, and the eighth switching transistor to be the same, and control turn-on time sequences of the second switching transistor, the third switching transistor, the fifth switching transistor, and the seventh switching transistor to be the same and to be reverse to the turn-on time sequence of the first switching transistor. A voltage of the first port is four times a voltage of the second port.

In a possible implementation, the DC-DC converter further includes: a controller. The controller is configured to: control turn-on time sequences of the first switching transistor, the fourth switching transistor, the fifth switching transistor, and the seventh switching transistor to be the same, and control turn-on time sequences of the second switching transistor, the third switching transistor, the sixth switching transistor, and the eighth switching transistor to be the same and to be reverse to the turn-on time sequence of the first switching transistor. A voltage of the first port is three times a voltage of the second port.

In a possible implementation, the DC-DC converter further includes: a controller. The controller is configured to: control the fifth switching transistor, the sixth switching transistor, and the eighth switching transistor to be all turned on, control the seventh switching transistor to be turned off, control turn-on time sequences of the first switching transistor and the fourth switching transistor to be the same, and control turn-on time sequences of the second switching transistor and the third switching transistor to be the same and to be reverse to the turn-on time sequence of the first switching transistor. A voltage of the first port is twice a voltage of the second port.

In a possible implementation, the DC-DC converter further includes: a controller. The controller is configured to: control the first switching transistor, the second switching transistor, the third switching transistor, the fifth switching transistor, the sixth switching transistor, and the eighth switching transistor to be all turned on, and control the fourth switching transistor and the seventh switching transistor to be both turned off. A voltage of the first port is the same as a voltage of the second port.

In the DC-DC converter provided above, only a specific implementation form of the SC circuit is described. The following describes an implementation form of the buck circuit in the DC-DC converter, namely, a working manner of the buck circuit. In the DC-DC converter provided in this embodiment of this application, some switching transistors in the SC circuit are reused in the buck circuit. In this way, the buck circuit and the SC circuit are integrated, so that integration of the entire DC-DC converter is improved, and a quantity of electronic components in the DC-DC converter is reduced. This further saves an area of a PCB, reduces a volume of the DC-DC converter, and facilitates lightness and thinness of an electronic device. The DC-DC converter further includes: a ninth switching transistor and a fourth inductor. The ninth switching transistor and the fourth inductor are connected in series and then connected between the second node and the third node. The first switching transistor, the third switching transistor, the fourth switching transistor, the ninth switching transistor, and the fourth inductor form a buck circuit. It should be understood that the buck circuit in the DC-DC converter provided in this application may not reuse a component in the SC circuit. In other words, the buck circuit may use another topology. This is not specifically limited.

In a possible implementation, the DC-DC converter further includes: a controller, configured to: control the second switching transistor and the seventh switching transistor to be both turned off, and control the fifth switching transistor, the sixth switching transistor, and the eighth switching transistor to be all turned on; and control the buck circuit to work in a buck state when the DC-DC converter is a buck converter, or control the buck circuit to work in a reverse boost state when the DC-DC converter is a boost converter.

According to the DC-DC converter provided in this application, the three switching transistors in the SC circuit are simultaneously used as switches in the buck circuit, to implement reusing of the switching transistors. In other words, an independent switching transistor does not need to be disposed in the buck circuit. Therefore, the DC-DC converter can implement functions of the buck circuit and the SC circuit separately. However, a quantity of electronic components is small. Therefore, an area of a PCB of the entire DC-DC converter can be saved, a volume of the entire DC-DC converter can be reduced, and more space can be saved for an electronic device.

In addition, according to the DC-DC converter provided in this application, in a process in which the first port supplies power to the second port, the controller may control the fifth switching transistor or the eighth switching transistor to be in a current controllable mode (also referred to as a gap mode). That is, an opening degree of the fifth switching transistor or the eighth switching transistor may be adjusted to adjust impedance of the fifth switching transistor or the eighth switching transistor, and further adjust a current flowing through the fifth switching transistor and the eighth switching transistor, namely, a charging current. This implements controlling of the charging current.

This application further provides an electronic device, including the DC-DC converter described above. The electronic device further includes: a battery. A first port of the DC-DC converter is configured to connect to an output end of a charger of the electronic device. A second port of the DC-DC converter is configured to charge the battery. A specific type of the electronic device is not specifically limited in this application. The electronic device may be a mobile phone, a tablet computer, a wearable device, or the like. For example, when the electronic device is a wearable device, the wearable device may be an earbud compartment of Bluetooth earbuds. A charger type of the electronic device is not specifically limited. In a possible implementation, when the DC-DC converter is a boost converter, the DC-DC converter is further configured to boost a voltage of the battery and then charge another electronic device.

Because the DC-DC converter provided in this application may work in both forward buck conversion and reverse boost conversion, the electronic device may further reversely charge another electronic device. In other words, the DC-DC converter is further configured to work in a reverse boost mode, that is, the DC-DC converter reversely charges the another electronic device after boosting a voltage of the battery BAT. For example, a mobile phone may be used to charge another mobile phone or a wearable device. The mobile phone boosts a voltage of a battery by using an internal DC-DC converter, and then provides the voltage to a USB port to charge a battery of the another mobile phone.

This application has at least the following advantages.

The DC-DC converter provided in this application may be applied to an electronic device, and is used as a charging circuit of the electronic device to charge a battery in the electronic device. The DC-DC converter may be used as a forward buck converter or may be used as a reverse boost converter. The converter includes the first port, the second port, the third port, and the switch capacitor SC circuit. When the DC-DC converter is a buck converter, the first port is used as a voltage input port, and the second port is used as a voltage output port; or when the DC-DC converter is a boost converter, the first port is used as a voltage input port, and the second port is used as a voltage output port. The SC circuit in the DC-DC converter provided in this application includes three capacitors and eight switching transistors. A connection relationship between the three capacitors and the eight switching transistors determines that an end of one capacitor in the three capacitors is grounded, and the other two capacitors are connected between the switching transistors. Therefore, a connection relationship between capacitors in the SC circuit may be simplified. In addition, two capacitors in the three capacitors have a same specification, and withstand voltages are low. Therefore, volumes occupied by the capacitors can be reduced, and an area of a printed circuit board PCB occupied in a circuit of the entire DC-DC converter can be reduced, to simplify the DC-DC converter. This saves more space for an electronic device and helps simplify the electronic device.

## BRIEF DESCRIPTION OF DRAWINGS

FIG. 1 is a diagram of an architecture of an internal charging circuit of an electronic device;
FIG. 2 is a schematic diagram of a DC-DC converter according to an embodiment of this application;

FIG. 3 is a schematic diagram of a DC-DC converter according to an embodiment of this application;

FIG. 4 is a schematic diagram of a buck path corresponding to FIG. 3;

FIG. 5 is a schematic diagram of two-time buck conversion of a DC-DC converter according to an embodiment of this application;

FIG. 6 is a schematic diagram of equal voltage conversion of a DC-DC converter according to an embodiment of this application;

FIG. 7 is a schematic diagram of another DC-DC converter according to an embodiment of this application;

FIG. 8 is a schematic diagram of another DC-DC converter according to an embodiment of this application;

FIG. 9 is a schematic diagram of another DC-DC converter according to an embodiment of this application;

FIG. 10 is a schematic diagram of another DC-DC converter according to an embodiment of this application; and

FIG. 11 is a schematic diagram of an electronic device according to an embodiment of this application.

## DESCRIPTION OF EMBODIMENTS

The following describes technical solutions in embodiments of this application with reference to the accompanying drawings in embodiments of this application. It is clear that the described embodiments are merely some rather than all embodiments of this application.

The following words "first" and "second" are merely intended for a purpose of description, and shall not be understood as an indication or implication of relative importance or implicit indication of the quantity of indicated technical features. Therefore, a feature limited by "first", "second", or the like may explicitly or implicitly include one or more features. In the description of this application, unless otherwise specified, "a plurality of" means two or more than two.

In addition, in this application, orientation terms such as "up" and "down" may include but are not limited to orientations schematically placed relative to components in the accompanying drawings. It should be understood that these directional terms may be relative concepts, and are used for relative description and clarification, and may correspondingly change based on changes in placement orientations of the components in the accompanying drawings.

In this application, unless otherwise expressly specified and limited, a term "connected" should be understood in a broad sense. For example, the "connected" may be a fastened connection, or may be a detachable connection or an integration; and the "connected" may be directly connected or indirectly connected through an intermediate medium. In addition, a term "coupled" may be a means of an electrical connection that enables signal transmission. The "coupled" can be a direct electrical connection or an indirect electrical connection through an intermediate medium.

To make a person skilled in the art better understand technical solutions provided in embodiments of this application, the following first describes an application scenario of a DC-DC converter.

As a charging circuit of an electronic device, the DC-DC converter provided in embodiments of this application may be applied to any scenario in which power supply or charging needs to be performed, for example, charging a battery of an electronic device. The electronic device may be a communication terminal like a mobile phone, or may be a wearable device like Bluetooth earbuds or a telephone watch. When the electronic device is Bluetooth earbuds, the electronic device is specifically a charging case of the Bluetooth earbuds.

For ease of understanding, the following uses application of a DC-DC converter in a mobile phone as an example for description.

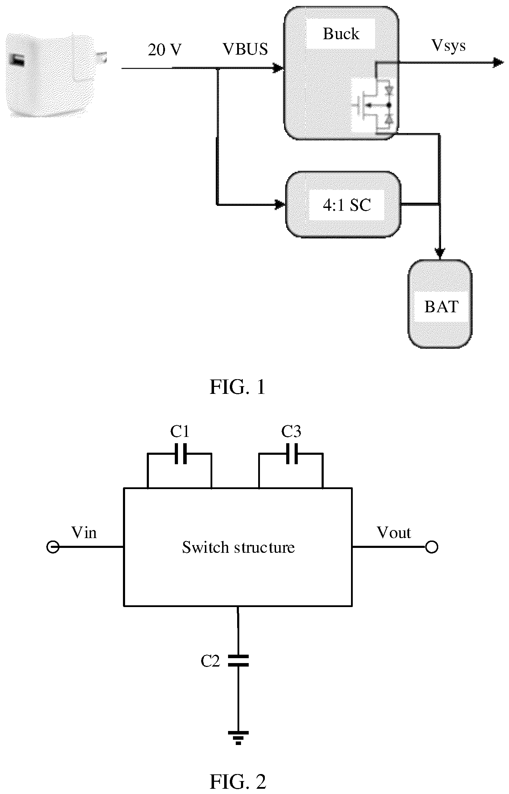

FIG. 1 is a diagram of an architecture of a DC-DC converter inside an electronic device.

Specific values of an input voltage and an output voltage of the DC-DC converter are not specifically limited in this embodiment of this application. FIG. 1 is merely an example for description. The input voltage of the DC-DC converter, namely, a direct current bus voltage VBUS, is 20 V, and the output voltage is 5 V. That is, the DC-DC converter is a buck converter that implements four-time buck. Both an SC circuit and a buck circuit charge a battery BAT with a voltage of 5 V. In addition, another output voltage Vsys of the buck circuit is used to supply power to another load in the electronic device.

The architecture of the DC-DC converter is described by using an example in which the buck circuit and the SC circuit are connected in parallel.

Because the SC circuit is an open-loop controlled DC-DC circuit, electric energy conversion efficiency is high. Therefore, when the electronic device like a mobile phone is fast charged, the SC circuit may be configured to charge the BAT, that is, the SC circuit reduces the voltage of 20 V to 5 V by four times, to charge the battery BAT. The buck circuit is a closed-loop controlled DC-DC circuit, and can implement fine control of an output voltage and an output current. However, electric energy conversion efficiency is lower than that of the SC circuit. Therefore, after fast charging, the buck circuit may be used to perform trickle charging for the BAT.

Whether a charger of the electronic device is a wired charger or a wireless charger is not specifically limited in this embodiment of this application. Technical solutions provided in embodiments of this application relate to a charging circuit inside the electronic device.

Currently, a requirement for lightness and thinness of an electronic device is increasingly high. Therefore, a smaller volume and a smaller area occupied by a charging circuit inside the electronic device are expected. However, a conventional SC circuit generally includes a plurality of switches and a plurality of capacitors. The capacitors are connected between the switches, and are not directly connected to a power supply or the ground. Due to the architecture of the SC circuit, the capacitors bear different voltages. Therefore, specifications of the capacitors need to be different. Different specifications of capacitors lead to different packaging of the capacitors, and finally the entire DC-DC converter occupies a large area and a large volume.

To reduce the area occupied by the DC-DC converter, an embodiment of this application provides a DC-DC converter, including three capacitors and eight switching transistors. A connection relationship between the three capacitors and the eight switching transistors determines that an end of one capacitor in the three capacitors is grounded, and the other two capacitors are connected between the switching transistors. Most of the capacitors of an SC circuit have a same specification, and some of the capacitors are directly grounded. Because of the same specification of the capacitors, packaging is the same. Therefore, an area of the DC-DC converter can be reduced, and a volume of the entire DC-DC converter is reduced.

To enable a person skilled in the art to better implement technical solutions provided in embodiments of this application, the following provides detailed description with reference to the accompanying drawing.

FIG. 2 is a schematic diagram of a DC-DC converter according to an embodiment of this application.

A direct current-direct current DC-DC converter provided in this embodiment includes a first port, a second port, a third port, and a switch capacitor SC circuit.

The SC circuit includes three capacitors and eight switching transistors.

An end of one of the three capacitors is connected to the third port, and the third port is grounded.

In FIG. 2, an example in which the DC-DC converter includes three capacitors, namely, a first capacitor C1, a second capacitor C2, and a third capacitor C3, is used for description. An example in which an end of the third capacitor C3 is grounded is used for description. Both ends of the first capacitor C1 and the second capacitor C2 are connected to the switching transistors.

In this embodiment of this application, specifications of the first capacitor C1 and the second capacitor C2 may be the same. A capacitor component whose withstand voltage is 10 V may be selected, and a capacitor component whose withstand voltage is 5 V may be selected for the third capacitor C3. In other words, two capacitors in the SC circuit provided in this embodiment of this application have a same specification, that is, there are only capacitors of two specifications. However, a conventional DC-DC converter includes capacitors of three or more specifications. In addition, a maximum withstand voltage of a capacitor is greater than that in this embodiment of this application. Therefore, the specification of the capacitor in the SC circuit provided in this embodiment of this application is small, and corresponding packaging is small. This can save an area and a volume of a PCB. In addition, after the specification of the capacitor is reduced, a subsequent parasitic parameter of the capacitor is reduced. This improves performance of the DC-DC converter.

FIG. 2 is a schematic diagram by using an example in which the DC-DC converter is a buck converter. The first port is used as a voltage input port, that is, an input voltage is indicated by Vin, and the second port is used as a voltage output port, that is, an output voltage is indicated by Vout.

When the DC-DC converter is a boost converter, the first port is used as a voltage output port, and the second port is used as a voltage input port. That is, the DC-DC converter may be a bidirectional converter, and an input port and an output port may be interchanged. The DC-DC converter may be used as a buck converter in a forward direction, and may be used as a boost converter in a reverse direction.

The SC circuit includes at least three capacitors and at least eight switching transistors. An end of one capacitor in the at least three capacitors is grounded. Therefore, a connection relationship among the capacitors in the SC circuit can be simplified. In addition, two capacitors in the three capacitors have a same specification, and withstand voltages are low. Therefore, volumes occupied by the capacitors can be reduced, and an area occupied by the circuit of the entire DC-DC converter can be reduced, to simplify the DC-DC converter. This saves more space for an electronic device, and helps simplify the electronic device.

Because the SC circuit of the DC-DC converter provided in this embodiment of this application includes a large quantity of switching transistors, for different time sequence control of the switching transistors, buck circuits with different buck ratios may be formed. For example, buck with a buck ratio of 4:1, 3:1, or 2:1 may be implemented.

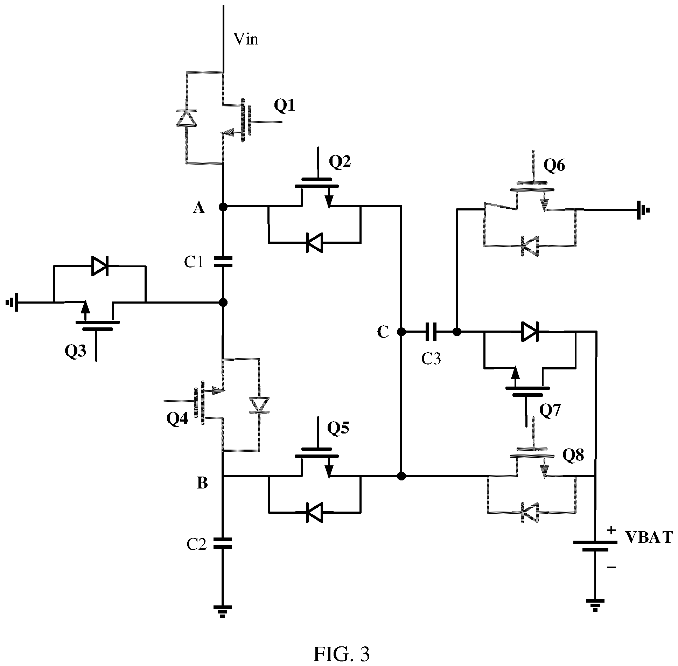

FIG. 3 is a schematic diagram of a DC-DC converter according to an embodiment of this application.

In this embodiment, an example in which a first port is used as an input port and a second port is used as an output port is used for description, that is, the DC-DC converter is a buck converter, the first port is connected to an input voltage Vin, and the second port is connected to a battery VBAT.

Three capacitors include a first capacitor C1, a second capacitor C2, and a third capacitor C3, and eight switching transistors include a first switching transistor Q1, a second switching transistor Q2, a third switching transistor Q3, a fourth switching transistor Q4, a fifth switching transistor Q5, a sixth switching transistor Q6, a seventh switching transistor Q7, and an eighth switching transistor Q8.

The first switching transistor Q1 is connected between the first port and a first node A, and the second switching transistor Q2 is connected between the first node A and a third node C. A first end of the first capacitor C1 is connected to the first node A, and a second end of the first capacitor C1 is grounded through the third switching transistor Q3. The fourth switching transistor Q4 is connected between the second end of the first capacitor C1 and a second node B, and the second capacitor C2 is connected between the second node B and a third port. The fifth switching transistor Q5 is connected between the second node B and the third node C.

A first end of the third capacitor C3 is connected to the third node C, a second end of the third capacitor C3 is grounded through the sixth switching transistor Q6, and the second end of the third capacitor C3 is further connected to the second port through the seventh switching transistor Q7, and the eighth switching transistor Q8 is connected between the third node C and the second port.

Specific types of Q1 to Q8 are not specifically limited in this embodiment of this application. Q1 to Q8 all are controllable switching transistors. In other words, a driving pulse signal is sent to a gate of the controllable switching transistor, and a switching status of the controllable switching transistor can be controlled. The controllable switching transistor may be any one of the following types: an insulated gate bipolar transistor (Insulated Gate Bipolar Transistor, IGBT), a metal oxide semiconductor field effect transistor (Metal Oxide Semiconductor Filed Effect Transistor, MOSFET, hereinafter referred to as MOS transistor), SiC MOSFET (Silicon Carbide Metal Oxide Semiconductor Filed Effect Transistor, silicon carbide field effect transistor), or the like.

In the accompanying drawings provided in embodiments of this application, an example in which a switching transistor is a MOS transistor is used for description.

With reference to the accompanying drawings, the following describes in detail that when driving time sequences of the eight switching transistors are different, corresponding buck multiples of the DC-DC converter are different.

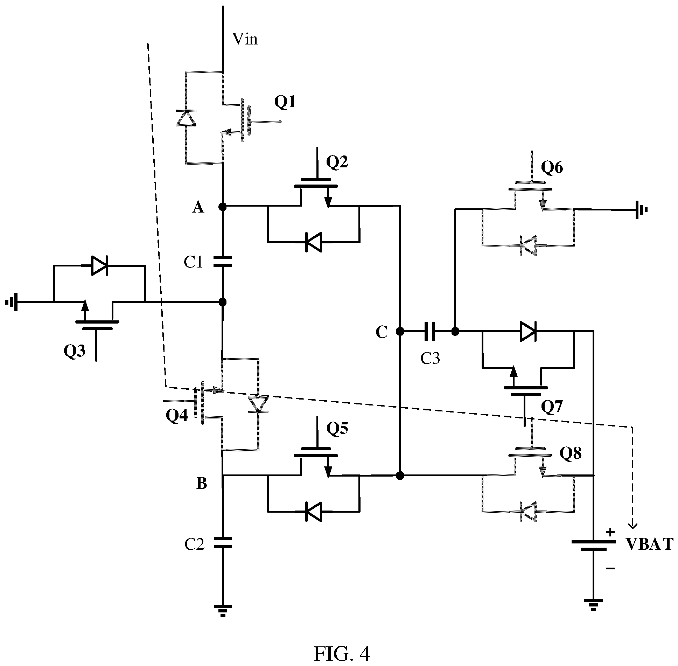

FIG. 4 is a schematic diagram of a buck path corresponding to FIG. 3.

In the buck path shown by a dashed arrow in FIG. 4, that is, a DC-DC converter charges VBAT after performing buck on Vin.

Type 1: A voltage of a first port is four times a voltage of a second port.

To drive statuses of Q1 to Q8, the DC-DC converter provided in this embodiment of this application further includes a controller (not shown in the figure).

The controller is configured to: control turn-on time sequences of the first switching transistor Q1, the fourth switching transistor Q4, the sixth switching transistor Q6, and the eighth switching transistor Q8 to be the same, control turn-on time sequences of the second switching transistor Q2, the third switching transistor Q3, the fifth switching transistor Q5, and the seventh switching transistor Q7 to be the same and to be reverse to the turn-on time sequence of the first switching transistor Q1. That is, switching statuses of the second switching transistor Q2, the third switching transistor Q3, the fifth switching transistor Q5, and the seventh switching transistor Q7 are complementary to a turn-on state of the first switching transistor Q1. In other words, when the first switching transistor Q1 is turned on, the second switching transistor Q2, the third switching transistor Q3, the fifth switching transistor Q5, and the seventh switching transistor Q7 are all turned off; and when Q1 is turned off, the second switching transistor Q2, the third switching transistor Q3, the fifth switching transistor Q5, and the seventh switching transistor Q7 are all turned on.

It should be understood that in this embodiment of this application, a duty cycle of the turn-on time sequence of each switching transistor may be set, and a value of the duty cycle is not specifically limited in this embodiment of this application.

Under the foregoing driving time sequence control, the eight switching transistors in the DC-DC converter provided in this embodiment can implement that the voltage of the first port is four times the voltage of the second port, that is, four-time reduction is implemented, and a ratio of an SC circuit is 4:1. In other words, VBAT = 0.25Vin. For example, when an input voltage is 20 V, an output voltage is 5 V, and a battery in a mobile phone is charged by using the 5 V voltage.

It can be learned from the foregoing working mode that when Q1, Q4, Q6, and Q8 are turned on, the input voltage Vin charges C1 and C2, and C3 supplies power to VBAT. In another working mode, when Q2, Q3, Q5, and Q7 are turned on, C1 and C2 simultaneously charge C3 and supply power to VBAT. During this alternately working, buck conversion of 4:1 is realized.

Type 2: A voltage of the first port is three times a voltage of the second port.

A controller is configured to: control turn-on time sequences of the first switching transistor Q1, the fourth switching transistor Q4, the fifth switching transistor Q5, and the seventh switching transistor Q7 to be the same, and control turn-on time sequences of the second switching transistor Q2, the third switching transistor Q3, the sixth switching transistor Q6, and the eighth switching transistor Q8 to be the same and to be reverse to the turn-on time sequence of the first switching transistor Q1. That is, switching statuses of Q2, Q3, Q6, and Q8 are complementary to a turn-on state of Q1. In other words, when Q1 is turned on, Q2 is turned off, and when Q1 is turned off, Q2 is turned on.

Under the foregoing driving time sequence control, the eight switching transistors in the DC-DC converter provided in this embodiment can implement that the voltage of the first port is three times the voltage of the second port, that is, four-time reduction is implemented, and a ratio of an SC circuit is 3:1. In other words, VBAT = Vin/3. For example, if an input voltage is 20 V, an output voltage is 20/3 V.

It can be learned from the foregoing working mode that when Q1, Q4, Q5, and Q7 are turned on, the input voltage Vin charges C1, C3, and VBAT. In another working mode, when Q2, Q3, Q6, and Q8 are turned on, C1 and C3 charge VBAT. During this alternately working, buck conversion of 3:1 is realized.

When the SC circuit realizes two-time buck and equal voltage conversion of 1:1, some of the eight switching transistors are in a normally turn-on state, namely, a normally turned-on state, some of the switching transistors are in a normally open state, and only some of the switching transistors are in a turning on and off action. To clearly and intuitively understand the technical solution, the following describes normally open and normally closed switching transistors with reference to the accompanying drawings.

Type 3: A voltage of the first port is twice a voltage of the second port.

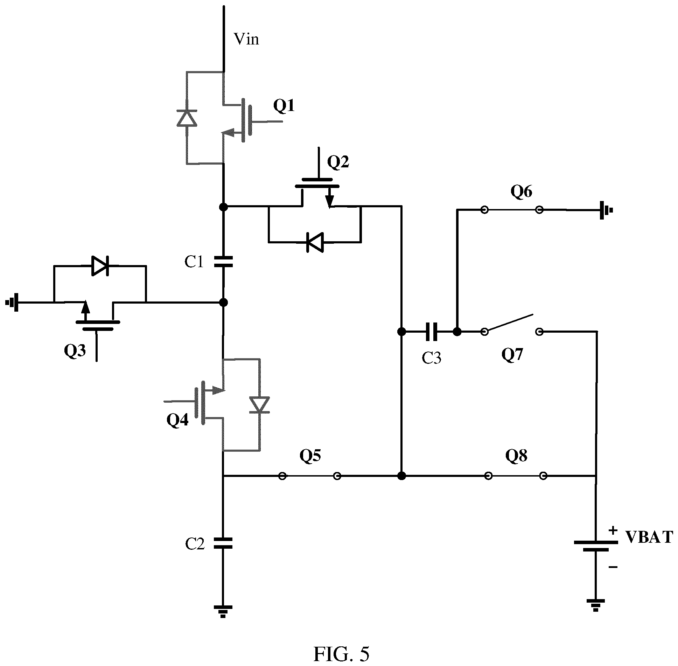

FIG. 5 is a schematic diagram of two-time buck conversion of a DC-DC converter according to an embodiment of this application.

A controller is configured to: control the fifth switching transistor Q5, the sixth switching transistor Q6, and the eighth switching transistor Q8 to be all turned on, control the seventh switching transistor Q7 to be turned off, control turn-on time sequences of the first switching transistor Q1 and the fourth switching transistor Q4 to be the same, control turn-on time sequences of the second switching transistor Q2 and the third switching transistor Q3 to be the same and to be reverse to the turn-on time sequence of the first switching transistor Q1. That is, switching statuses of Q2 and Q3 are complementary to a turn-on state of Q1. In other words, when Q1 is turned on, Q2 is turned off, and when Q1 is turned off, Q2 is turned on.

Under the foregoing driving time sequence control, the eight switching transistors in the DC-DC converter provided in this embodiment can implement that the voltage of the first port is twice the voltage of the second port, that is, two-time reduction is implemented, and a ratio of an SC circuit is 2:1. In other words, VBAT = 0.5Vin. For example, if an input voltage is 20 V, an output voltage is 10 V.

It can be learned from the foregoing working mode that when Q1 and Q4 are turned on, the input end Vin charges C1 and VBAT. In another working mode, that is, when the Q2 and Q3 transistors are turned on, C1 charges VBAT. During this alternately working, buck conversion of 2:1 is realized.

Type 4: A voltage of the first port is the same as a voltage of the second port.

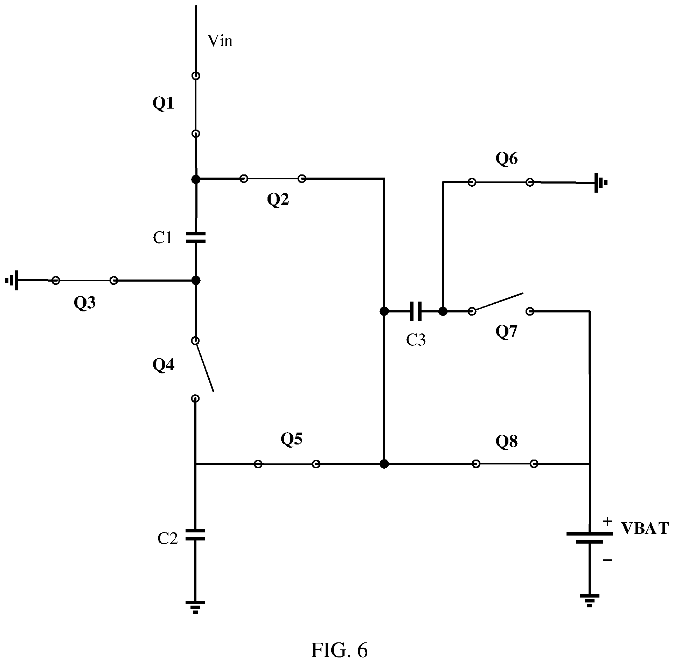

FIG. 6 is a schematic diagram of equal voltage conversion of a DC-DC converter according to an embodiment of this application.

A controller is configured to: control the first switching transistor Q1, the second switching transistor Q2, the third switching transistor Q3, the fifth switching transistor Q5, the sixth switching transistor Q6, and the eighth switching transistor Q8 to be all turned on, that is, to keep the first switching transistor Q1, the second switching transistor Q2, the third switching transistor Q3, the fifth switching transistor Q5, the sixth switching transistor Q6, and the eighth switching transistor Q8 to be turned on, and control the fourth switching transistor Q4 and the seventh switching transistor Q7 to be both turned off, that is, to implement a passthrough working mode.

It can be learned from the foregoing analysis that, when an input voltage and an output voltage of the DC-DC converter are the same, all switching transistors in the entire circuit are in static control, that is, normally open or normally closed, and do not need to be in a turning on and off action based on a switching frequency.

The voltage of the first port is the same as the voltage of the second port, that is, VBAT = Vin.

It can be learned from the foregoing working mode that the input end Vin charges VBAT during an entire working state.

In conclusion, it can be learned from the foregoing that the SC circuit in the DC-DC converter provided in this embodiment of this application has different switching time sequences, and therefore a buck circuit with a plurality of buck ratios may be implemented. Specifically, the buck circuit may be selected and set based on an actual application scenario.

In addition, the eight switching transistors in this embodiment of this application may be manufactured together, for example, integrally manufactured on a printed circuit board (PCB, Printed Circuit Board) by using a semiconductor process.

The DC-DC converter described in the foregoing embodiment is described by using an example in which the SC circuit is used as a buck circuit. It should be understood that when the second port is used as an input end and the first port is used as an output end, the SC circuit may be used as a reverse boost circuit, each boost ratio corresponds to a reciprocal of the buck ratio described above, and a control time sequence of each switching transistor is the same as that described in the foregoing embodiment. The following is brief description. Continued reference is made to FIG. 3.

Type 1: A voltage of the second port is 1/4 of a voltage of the first port.

A controller controls turn-on time sequences of the first switching transistor Q1, the fourth switching transistor Q4, the sixth switching transistor Q6, and the eighth switching transistor Q8 to be the same, and controls turn-on time sequences of the second switching transistor Q2, the third switching transistor Q3, the fifth switching transistor Q5, and the seventh switching transistor Q7 to be the same and to be reverse to the turn-on time sequence of the first switching transistor Q1. This is referred to as a 1:4 boost working mode, and Vin = 4 x VBAT.

It can be learned from the foregoing working mode that when Q1, Q4, Q6, and Q8 are turned on, VBAT charges C3, and C1 and C2 are connected in series and then supply power to a Vin port. In another working mode, when Q2, Q3, Q5, and Q7 are turned on, VBAT and C3 are connected in series and then charge C1 and C2. During this alternately working, boost conversion of 1:4 is realized.

Type 2: A voltage of the second port is 1/3 of a voltage of the first port.

The controller controls turn-on time sequences of the first switching transistor Q1, the fourth switching transistor Q4, the fifth switching transistor Q5, and the seventh switching transistor Q7 to be the same, and controls turn-on time sequences of the second switching transistor Q2, the third switching transistor Q3, the sixth switching transistor Q6, and the eighth switching transistor Q8 to be the same and to be reverse to the turn-on time sequence of the first switching transistor Q1. This is referred to as a 1:3 boost working mode, and Vin = 3 x VBAT.

It can be learned from the foregoing working mode that when Q1, Q4, Q5, and Q7 are turned on, VBAT, C1, and C3 are connected in series and then charge Vin. In another working mode, when the Q2, Q3, Q6, and Q8 transistors are turned on, VBAT charges C1 and C3 respectively. During this alternately working, boost conversion of 1:3 is realized.

Type 3: A voltage of the second port is 1/2 of a voltage of the first port.

The controller controls the fifth switching transistor Q5, the sixth switching transistor Q6, and the eighth switching transistor Q8 to be all turned on, controls the seventh switching transistor Q7 to be turned off, controls turn-on time sequences of the first switching transistor Q1 and the fourth switching transistor Q4 to be same, and controls turn-on time sequences of the second switching transistor Q2 and the third switching transistor Q3 to be the same and to be reverse to the turn-on time sequence of the first switching transistor Q1. This is called two working modes, namely, a 1:2 boost working mode, and Vin = 2 x VBAT.

It can be learned from the foregoing working mode that when Q1 and Q4 are turned on, VBAT and C1 are connected in series and then charge Vin. In another working mode, that is, when Q2 and Q3 are turned on, VBAT charges C1. During this alternately working, boost conversion of 1:2 is realized.

Type 4: A voltage of the second port is the same as a voltage of the first port.

The controller controls Q1, Q2, Q3, Q5, Q6, and Q8 to keep on, and Q4 and Q7 to keep off. That is, a passthrough working mode is implemented, and Vin = VBAT.

It can be learned from the foregoing working mode that VBAT charges Vin during an entire working state.

The DC-DC converter provided in this embodiment of this application may further work in a reverse boost mode. For example, the DC-DC converter is located in a mobile phone, and the mobile phone may charge another electronic device after reversely boosting a voltage of a battery, for example, charge another mobile phone that needs to be charged. A reverse boost multiple may be selected based on a requirement of a specific application scenario. When driving time sequences of the switching transistors in the SC circuit are different, boost conversion of 1:4, 1:3, or 1:2 may be implemented.

To reduce a loss of the SC circuit, the DC-DC converter provided in this embodiment of this application may further include an inductor, so that LC resonance is formed between the inductor and the capacitor, to reduce power consumption. The following provides detailed description with reference to the accompanying drawings.

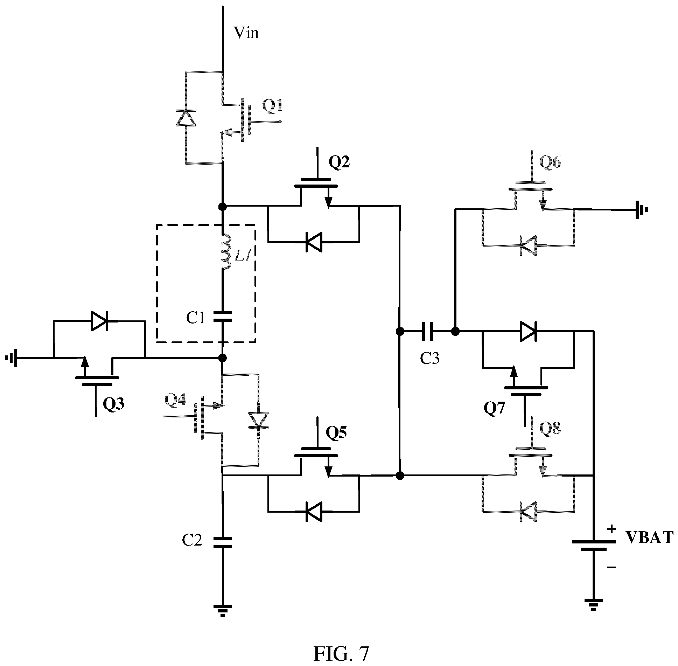

FIG. 7 is a schematic diagram of another DC-DC converter according to an embodiment of this application.

The DC-DC converter provided in this embodiment of this application further includes: a first inductor L1.

A first end of the first inductor L1 is connected to a first node, and a second end of the first inductor L1 is connected to a first end of a first capacitor C1.

The first inductor L1 and the first capacitor C1 form LC series resonance. When a switching frequency in the DC-DC converter is k, it is ensured that a resonance frequency of the LC series resonance is equal to or less than the switching frequency k, and when the resonance frequency of the LC series resonance is less than the switching frequency k, the resonance frequency of the LC series resonance may be slightly less than the switching frequency k, that is, the resonance frequency of the LC series resonance is close to the switching frequency k. Therefore, the following is obtained:

$$k \geq \frac{1}{2\pi\sqrt{L1 * C1}}$$

According to the formula, an appropriate capacitance value and inductance value may be selected for adaptation, to ensure that the resonance frequency is equal to or slightly less than the switching frequency. When a capacitor specification is selected, a derating effect of an effective capacitance value under a direct current bias voltage is considered and accurate calculation is performed. In a circuit working mode, charging and discharging processes of the capacitor can be performed in a resonant manner with the inductor, so that a surge current during the charging and discharging of the capacitor can be effectively reduced. In addition, control of switching of a switching status of the switching transistor by using a zero current (or close to a zero current) or control of switching of a switching status of the switching transistor by using a zero voltage (close to a zero voltage) may be implemented by using a resonance characteristic.

A resonant current (namely, an inductor current I L1) on the inductor L1 and cross voltages VC 1, VC 2, and VC 3 corresponding to the capacitors C1, C2, and C3 are alternating sine waves or nearly alternating sine waves. Therefore, a soft switching function of the switching transistor can be implemented, power consumption of the switching transistor can be reduced, and electric energy conversion efficiency of the DC-DC converter can be improved.

In addition to the first inductor, the DC-DC converter provided in this embodiment of this application may further include a second inductor. To be specific, it can be implemented that both the first capacitor and the third capacitor have corresponding inductors to form LC series resonance.

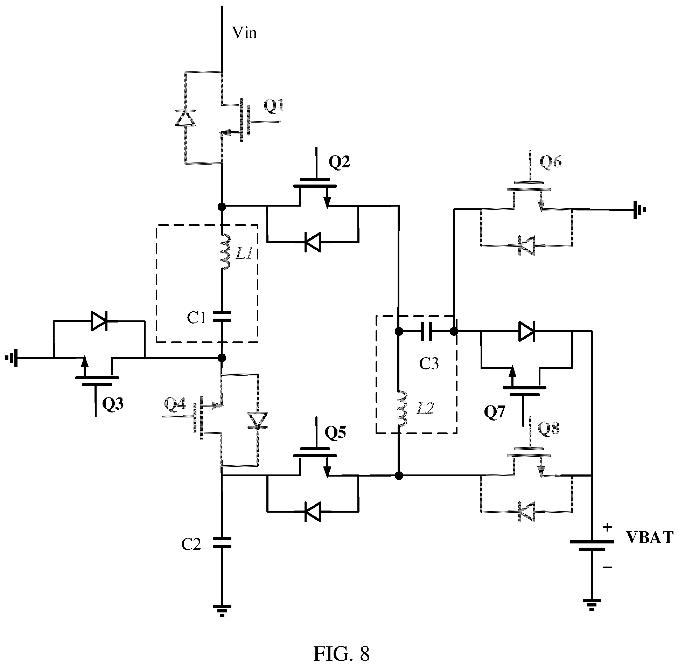

FIG. 8 is a schematic diagram of another DC-DC converter according to an embodiment of this application.

Based on FIG. 7, the DC-DC converter provided in this embodiment of this application further includes: a second inductor L2.

A first end of the second inductor L2 is connected to a first end of a third capacitor C3, and a second end of the second inductor L2 is connected to a first end of the eighth switch Q8.

When the DC-DC converter includes the first inductor L1 and the second inductor L2, two resonant cavities are formed.

$$k \geq \frac{1}{2\pi\sqrt{L1*C1}} = \frac{1}{2\pi\sqrt{L2*C3}}$$

An inductance value of the second inductor and a capacitance value of the third capacitor need to meet a relationship between a resonance frequency and a switching frequency, to be specific, the resonance frequency needs to be equal to or slightly less than the switching frequency. This is similar to the description corresponding to FIG. 7, and details are not described herein again.

FIG. 7 and FIG. 8 show implementations of reducing power consumption of the DC-DC converter by using resonance. The following describes another implementation, to be specific, an inductor is connected to an output end, so that the inductor at the output end and an equivalent capacitor in an entire SC circuit form a resonant circuit.

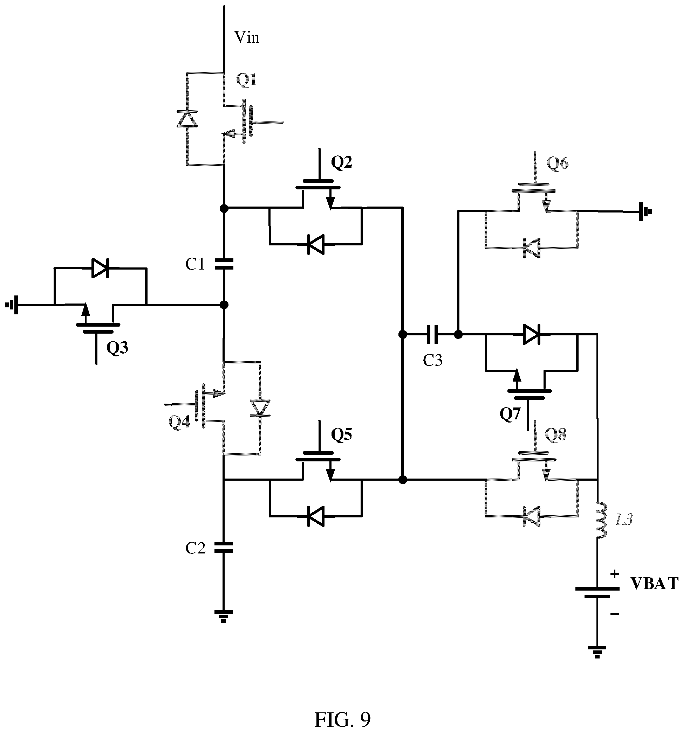

FIG. 9 is a schematic diagram of another DC-DC converter according to an embodiment of this application.

The DC-DC converter provided in this embodiment of this application further includes: a third inductor L3.

A first end of the third inductor L3 is connected to a second end of an eighth switch Q8, and a second end of the third inductor L3 is connected to a second port.

When a switching frequency of a switching transistor in an SC circuit is k, parameter design ensures that some capacitors and the third inductor L3 in the SC circuit form a resonant circuit, and a resonance frequency of the resonant circuit is equal to or slightly less than the switching frequency k. When a capacitor specification is selected, a derating effect of an effective capacitance under a direct current bias voltage is considered, to accurately match the capacitor specification. Charging and discharging processes of some capacitors may be performed in a resonant manner with the third inductor, so that surge currents during the charging and discharging of the capacitors can be effectively reduced. In addition, switching of switching statuses of at least some switching transistors (Q1 to Q8) at a zero current (near a zero current) may be implemented by using a resonance characteristic.

A resonant current (namely, an inductor current IL) on the third inductor L3 is a full-wave rectified sine wave or a nearly full-wave rectified sine wave, and cross voltages corresponding to some capacitors (C1 to C3) are alternating sine waves or nearly alternating sine waves. Therefore, a soft switching function of the switching transistor can be implemented, power consumption of the switching transistor can be reduced, and electric energy conversion efficiency of the DC-DC converter can be improved.

In the DC-DC converter provided in the foregoing embodiment, only a specific implementation form of the SC circuit is described. The following describes an implementation form of the buck circuit in the DC-DC converter, namely, a working manner of the buck circuit. In the DC-DC converter provided in this embodiment of this application, some switching transistors in the SC circuit are reused in the buck circuit. In this way, the buck circuit and the SC circuit are integrated, so that integration of the entire DC-DC converter is improved, and a quantity of electronic components in the DC-DC converter is reduced. This further saves an area of a PCB, reduces a volume of the DC-DC converter, and facilitates lightness and thinness of an electronic device. It should be understood that the buck circuit in the DC-DC converter provided in this embodiment of this application may alternatively be combined with the SC circuit provided in this embodiment of this application by using a buck circuit in another form. This is not specifically limited. In other words, the buck circuit may not reuse a component in the SC circuit.

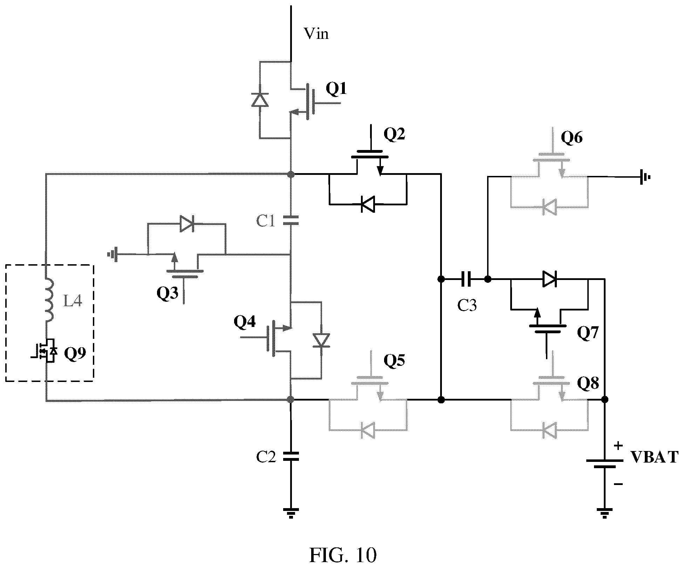

FIG. 10 is a schematic diagram of another DC-DC converter according to an embodiment of this application.

The DC-DC converter provided in this embodiment further includes: a ninth switching transistor Q9 and a fourth inductor L4.

The ninth switching transistor Q9 and the fourth inductor L4 are connected in series and then connected between the second node and the third node.

The first switching transistor Q1, the third switching transistor Q3, the fourth switching transistor Q4, the ninth switching transistor Q9, and the fourth inductor L4 form a buck circuit, that is, the buck circuit includes the ninth switching transistor Q9 and the fourth inductor L4, and reuses Q1, Q3, and Q4 in the SC circuit.

It should be understood that, when the ninth switching transistor Q9 is turned off, the circuit structure shown in FIG. 10 is the same as that shown in FIG. 3, namely, the SC circuit, and a specific working principle is also the same. Details are not described herein again.

The following describes a state in which the circuit shown in FIG. 10 works in a forward buck state (Buck circuit) and a reverse boost state (Boost circuit).

The controller is configured to: control the second switching transistor Q2 and the seventh switching transistor Q7 to be both turned off, and control the fifth switching transistor Q5, the sixth switching transistor Q6, and the eighth switching transistor Q8 to be all turned on; control the buck circuit to work in a buck state when the DC-DC converter is a buck converter; and control the buck voltage to work in a reverse boost state when the DC-DC converter is a boost converter.

The ninth switching transistor Q9 remains in a turn-on state. In this case, the circuit works in a buck circuit mode or a reverse boost circuit mode, where Q1, Q3, Q4, L4, and C1 form a three-switch buck circuit structure. Working states of other components are as follows. Q2 and Q7 keep turning off, and Q5, Q6, and Q8 remain in a turn-on state. C2 and C3 can be used as output capacitors of the three-switch buck circuit. This reduces a quantity of output capacitors of a buck circuit in a conventional solution, to save an area of a PCB of an entire DC-DC converter.

A control mode and a working principle of the three-switch buck circuit are not described herein again.

According to the DC-DC converter provided in this embodiment of this application, the three switching transistors Q1, Q3, and Q4 in the SC circuit are used as switches in the buck circuit, to implement reusing of the switching transistor. In other words, an independent switching transistor does not need to be disposed in the buck circuit. Therefore, the DC-DC converter can implement a function of connecting an independent buck circuit and an SC circuit in parallel that is shown in FIG. 1. However, a quantity of electronic components is less than that in the DC-DC converter shown in FIG. 1. Therefore, an area of a PCB of the entire DC-DC converter can be saved, a volume of the entire DC-DC converter can be reduced, and more space can be saved for an electronic device.

In addition, according to the DC-DC converter provided in this embodiment of this application, in a process in which Vin supplies power to VBAT, the controller may control the fifth switching transistor Q5 or the eighth switching transistor Q8 to be in a current controllable mode (also referred to as a gap mode). That is, an opening degree of the fifth switching transistor Q5 or the eighth switching transistor Q8 may be adjusted, to adjust impedance of the fifth switching transistor Q5 or the eighth switching transistor Q8, and further adjust a current flowing through the fifth switching transistor Q5 and the eighth switching transistor Q8, namely, a charging current. This implements controlling of the charging current.

Based on the DC-DC converter provided in the foregoing embodiments, an embodiment of this application further provides an electronic device. The following provides detailed description with reference to the accompanying drawings.

A specific type of the electronic device is not specifically limited in this embodiment of this application. The electronic device may be a mobile phone, a tablet computer, a wearable device, or the like. For example, when the electronic device is a wearable device, the wearable device may be an earbud compartment of Bluetooth earbuds. A charger type of the electronic device is not specifically limited. For example, a charger may be a wired charger, or may be a wireless charger. For ease of understanding, the following uses an example in which the electronic device is a mobile phone for description.

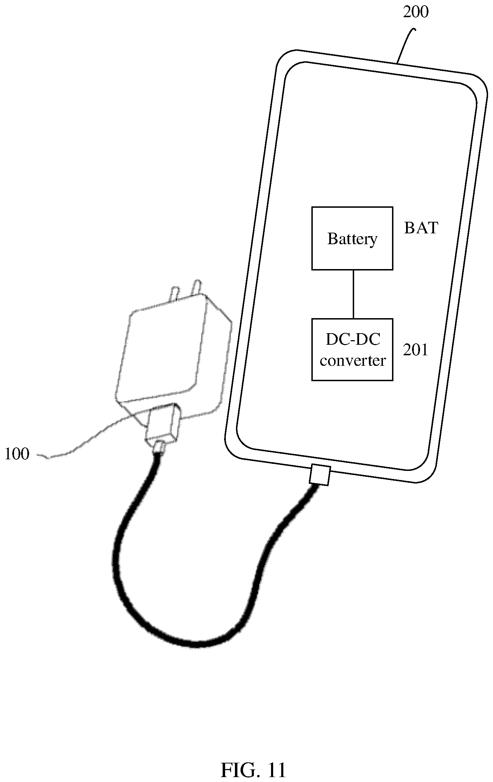

FIG. 11 is a schematic diagram of an electronic device according to an embodiment of this application.

The electronic device 200 provided in this embodiment of this application includes a DC-DC converter 201 provided in any one of the foregoing embodiments. The electronic device 200 further includes: a battery BAT.

A first port of the DC-DC converter 201 is configured to connect to an output end of a charger 100 of the electronic device 200.

A second port of the DC-DC converter 201 is configured to charge the battery BAT.

Based on the foregoing description of the DC-DC converter, when an output voltage of the charger 100 is 20 V, that is, an input voltage of the DC-DC converter 201 is 20 V, an SC circuit inside the DC-DC converter 201 may be controlled to work in a buck mode of 4:1. That is, the DC-DC converter 201 may output a voltage of 5 V to charge the battery BAT. A buck ratio of the SC circuit is not specifically limited in this embodiment of this application. A time sequence of a switching transistor may be controlled based on a requirement of an actual scenario, so that different buck ratios can be implemented. For example, the buck ratio may be adjusted based on the output voltage of the charger 100 corresponding to the electronic device 200, or the buck ratio may be adjusted based on a model of the battery BAT of the electronic device 200.

The DC-DC converter in the electronic device provided in this embodiment of this application is configured to charge the battery. The SC circuit in the DC-DC converter includes three capacitors and eight switching transistors, and an end of one of the three capacitors is grounded. Therefore, a connection relationship among the capacitors in the SC circuit can be simplified. In addition, two capacitors in the three capacitors have a same specification, and withstand voltages are low. Therefore, volumes occupied by the capacitors can be reduced, and an area occupied by the circuit of the entire DC-DC converter can be reduced, to simplify the DC-DC converter. This saves more space for an electronic device, helps simplify the electronic device, and further implements lightness and thinness.

In addition, the DC-DC converter 201 of the electronic device provided in this embodiment of this application further includes a buck circuit that reuses some switching transistors in the SC circuit. In other words, the DC-DC converter 201 may charge the battery BAT by using the SC circuit, or may charge the battery BAT by using the buck circuit. Because the DC-DC converter has higher integration, an area of a PCB occupied in the DC-DC converter can be further reduced. This further facilitates lightness and thinness of the electronic device.

Because the DC-DC converter 201 provided in this embodiment of this application may work in both forward buck conversion and reverse boost conversion, the electronic device 200 may further reversely charge another electronic device. In other words, the DC-DC converter 201 is further configured to work in a reverse boost mode, that is, the DC-DC converter 201 reversely charges the another electronic device after boosting a voltage of the battery BAT. For example, a mobile phone may be used to charge another mobile phone or a wearable device. The mobile phone boosts a voltage of a battery by using an internal DC-DC converter, and then provides the voltage to a USB port to charge a battery of the another mobile phone.

It should be understood that in this application, "at least one (item)" means one or more, and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. A character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural.

The foregoing description is merely an example embodiment of this application, but is not intended to limit this application in any form. Although the example embodiments of this application are disclosed above, embodiments are not intended to limit this application. By using the method and the technical content disclosed above, any person of ordinary skill in the art can make a plurality of possible changes and modifications on the technical solutions of this application, or amend the technical solutions thereof to be embodiments with equal effects through equivalent variations without departing from the protection scope of the technical solutions of this application. Therefore, any simple amendments, equivalent variations, or modifications made to the foregoing embodiments based on the technical essence of this application without departing from content of technical solutions of this application still fall within the protection scope of technical solutions of this application.

## Claims

1. A direct current-direct current, DC-DC, converter, comprising a first port, a second port, a third port, and a switch capacitor, SC, circuit, wherein

   when the DC-DC converter is a buck converter, the first port is used as a voltage input port, and the second port is used as a voltage output port; or when the DC-DC converter is a boost converter, the first port is used as a voltage output port, the second port is used as a voltage input port, and the third port is grounded; and
   the SC circuit comprises three capacitors and eight switching transistors, wherein the three capacitors comprise a first capacitor, a second capacitor, and a third capacitor, and the eight switching transistors comprise a first switching transistor, a second switching transistor, a third switching transistor, a fourth switching transistor, a fifth switching transistor, a sixth switching transistor, a seventh switching transistor, and an eighth switching transistor;
   the first switching transistor is connected between the first port and a first node, and the second switching transistor is connected between the first node and a third node; a first end of the first capacitor is connected to the first node, and a second end of the first capacitor is grounded through the third switching transistor; the fourth switching transistor is connected between the second end of the first capacitor and a second node, and the second capacitor is connected between the second node and the third port; and the fifth switching transistor is connected between the second node and the third node; and
   a first end of the third capacitor is connected to the third node, a second end of the third capacitor is grounded through the sixth switching transistor, the second end of the third capacitor is further connected to the second port through the seventh switching transistor, and the eighth switching transistor is connected between the third node and the second port.

2. The DC-DC converter according to claim 1, further comprising a first inductor, wherein the first end of the first capacitor is connected to the first node through the first inductor.

3. The DC-DC converter according to claim 1 or 2, further comprising a second inductor, wherein a common end of the eighth switching transistor and the fifth switching transistor is connected to the third node through the second inductor.

4. The DC-DC converter according to claim 1, further comprising a third inductor, wherein
a common end of the eighth switching transistor and the seventh switching transistor is connected to the second port through the third inductor.

5. The DC-DC converter according to any one of claims 1 to 4, further comprising a controller, wherein

the controller is configured to: control turn-on time sequences of the first switching transistor, the fourth switching transistor, the sixth switching transistor, and the eighth switching transistor to be the same, and control turn-on time sequences of the second switching transistor, the third switching transistor, the fifth switching transistor, and the seventh switching transistor to be the same and to be reverse to the turn-on time sequence of the first switching transistor; and
a voltage of the first port is four times a voltage of the second port.

6. The DC-DC converter according to any one of claims 1 to 4, further comprising a controller, wherein

the controller is configured to: control turn-on time sequences of the first switching transistor, the fourth switching transistor, the fifth switching transistor, and the seventh switching transistor to be the same, and control turn-on time sequences of the second switching transistor, the third switching transistor, the sixth switching transistor, and the eighth switching transistor to be the same and to be reverse to the turn-on time sequence of the first switching transistor; and
a voltage of the first port is three times a voltage of the second port.

7. The DC-DC converter according to any one of claims 1 to 4, further comprising a controller, wherein

the controller is configured to: control the fifth switching transistor, the sixth switching transistor, and the eighth switching transistor to be all turned on, control the seventh switching transistor to be turned off, control turn-on time sequences of the first switching transistor and the fourth switching transistor to be the same, and control turn-on time sequences of the second switching transistor and the third switching transistor to be the same and to be reverse to the turn-on time sequence of the first switching transistor; and
a voltage of the first port is twice a voltage of the second port.

8. The DC-DC converter according to any one of claims 1 to 4, further comprising a controller, wherein

the controller is configured to: control the first switching transistor, the second switching transistor, the third switching transistor, the fifth switching transistor, the sixth switching transistor, and the eighth switching transistor to be all turned on, and control the fourth switching transistor and the seventh switching transistor to be both turned off; and
a voltage of the first port is the same as a voltage of the second port.

9. The DC-DC converter according to any one of claims 1 to 4, further comprising a ninth switching transistor and a fourth inductor, wherein

the ninth switching transistor and the fourth inductor are connected in series and then connected between the second node and the third node; and
the first switching transistor, the third switching transistor, the fourth switching transistor, the ninth switching transistor, and the fourth inductor form a buck circuit.

10. The DC-DC converter according to claim 9, further comprising a controller, wherein

the controller is configured to: control the second switching transistor and the seventh switching transistor to be both turned off, and control the fifth switching transistor, the sixth switching transistor, and the eighth switching transistor to be all turned on; and
control the buck circuit to work in a buck state when the DC-DC converter is the buck converter, or control the buck circuit to work in a reverse boost state when the DC-DC converter is the boost converter.

11. The DC-DC converter according to any one of claims 1 to 10, wherein a withstand voltage of the first capacitor is the same as a withstand voltage of the second capacitor, and a withstand voltage of the third capacitor is less than the withstand voltage of the first capacitor.

12. An electronic device, comprising the DC-DC converter according to any one of claims 1 to 11, and further comprising a battery, wherein

a first port of the DC-DC converter is configured to connect to an output end of a charger of the electronic device; and

a second port of the DC-DC converter is configured to charge the battery.

13. The electronic device according to claim 12, wherein when the DC-DC converter is a boost converter, the DC-DC converter is further configured to boost a voltage of the battery and then charge another electronic device.

20 V    VBUS    Buck    Vsys

4:1 SC

BAT

FIG. 1

C1        C3

Vin    Switch structure    Vout

C2

FIG. 2

FIG. 3

FIG. 4

FIG. 5

FIG. 6

FIG. 7

FIG. 8

FIG. 9

FIG. 10

FIG. 11

<div align="center">

**INTERNATIONAL SEARCH REPORT**

</div>

| International application No. |
| --- |
| **PCT/CN2023/071594** |

| A. | CLASSIFICATION OF SUBJECT MATTER |
| --- | --- |
| | H02M3/07(2006.01)i |

According to International Patent Classification (IPC) or to both national classification and IPC

| B. | FIELDS SEARCHED |
| --- | --- |

Minimum documentation searched (classification system followed by classification symbols)

    IPC:H02M

Documentation searched other than minimum documentation to the extent that such documents are included in the fields searched

Electronic data base consulted during the international search (name of data base and, where practicable, search terms used)

    CNTXT, ENTXT, ENTXTC, DWPI, WPABS, CNKI, IEEE: 开关电容, 电荷泵, 充电泵, 跨电容, 双向, 正向, 反向, 降压, 升压, charg+ pump, switch+ capacit+, fly+ capacit+, bidirection+, two direction+, forward, reverse

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2006262619 A (MITSUBISHI ELECTRIC CORP.) 28 September 2006 (2006-09-28) <br>     see description, paragraphs 5-47, and figures 1-10 | 1-4, 8, 11-13 |
| Y | TW 200843307 A (ADVANCED ANALOGIC TECHNOLOGIES, INC.) 01 November 2008 (2008-11-01) <br>     see description, pages 65-66, and figure 17A | 1-4, 8, 11-13 |
| Y | CN 112953201 A (SILERGY SEMICONDUCTOR TECHNOLOGY (HANGZHOU) LTD.) 11 June 2021 (2021-06-11) <br>     see description, paragraphs 2-129, and figures 1-11 | 1-4, 8, 11-13 |
| A | CN 108539981 A (NANJING SILERGY SEMICONDUCTOR TECHNOLOGY CO., LTD.) 14 September 2018 (2018-09-14) <br>     see entire document | 1-13 |
| A | WO 2022067701 A1 (HUAWEI TECHNOLOGIES CO., LTD.) 07 April 2022 (2022-04-07) <br>     see entire document | 1-13 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 April 2023** | **10 May 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/071594**

| Patent document cited in search report | | | Publication date (day/month/year) | Patent family member(s) | | | Publication date (day/month/year) |
|---|---|---|---|---|---|---|---|
| JP | 2006262619 | A | 28 September 2006 | JP | 4546296 | B2 | 15 September 2010 |
| TW | 200843307 | A | 01 November 2008 | TWI | 357710 | B | 01 February 2012 |
| | | | | US | 2009059630 | A1 | 05 March 2009 |
| | | | | US | 7777459 | B2 | 17 August 2010 |
| | | | | WO | 2008082582 | A1 | 10 July 2008 |
| | | | | TW | 200843308 | A | 01 November 2008 |
| | | | | TW | 200843310 | A | 01 November 2008 |
| | | | | TW | I357711 | B | 01 February 2012 |
| | | | | TW | I357713 | B | 01 February 2012 |
| CN | 112953201 | A | 11 June 2021 | US | 2022255429 | A1 | 11 August 2022 |
| CN | 108539981 | A | 14 September 2018 | US | 2019372457 | A1 | 05 December 2019 |
| | | | | US | 10673325 | B2 | 02 June 2020 |
| | | | | CN | 208241576 | U | 14 December 2018 |
| WO | 2022067701 | A1 | 07 April 2022 | CN | 114586268 | A | 03 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210590993